# EUROPEAN PATENT APPLICATION

(11) **EP 2 184 332 A1**
(43) Date of publication of application: **12.05.2010**
(21) Application number: 08828823.8
(22) Date of filing: 25.08.2008
(51) Int. Cl.: C09J 7/02, B32B 27/00, C09J 133/04, C09J 133/14, C09J 183/04, C09J 183/07

(54) **RELEASABLE ADHESIVE SHEET AND METHOD FOR PROTECTING INCOMPLETELY CURED COATING FILM**

(30) Priority: 27.08.2007 JP 2007219730
(71) Applicant: Lintec Corporation, Tokyo 173-0001 (JP); Honda Motor Co., Ltd., Minato-ku Tokyo 107-8556 (JP)
(72) Inventor: TANAKA, Atsuhiro, Tokyo 173-0001 (JP); HAYAKAWA, Fumio, Tokyo 107-8556 (JP); KUBOTA, Naoki, Tokyo 107-8556 (JP)
(74) Representative: Gille Hrabal Struck Neidlein Prop Roos
(86) International application number: PCT/JP2008/065106
(87) International publication number: WO 2009/028455

(57) **Abstract**

According to the present invention, there are provided a removable pressure sensitive adhesive sheet applicable even to a coating film incompletely cured immediately after having been dried and a method of protecting an incompletely cured coating film. The removable pressure sensitive adhesive sheet of the present invention is a removable pressure sensitive adhesive sheet **characterized in that** the sheet is obtained by providing a substrate sheet with a pressure sensitive adhesive layer, and that the pressure sensitive adhesive layer has a storage elastic modulus at 23°C of 1.0×10⁵ Pa or more and a storage elastic modulus at 80°C of 0.4×10⁵ Pa or more. The sheet is applicable even to an incompletely cured coating film.

## Description

### Technical Field

The present invention relates to a removable pressure sensitive adhesive sheet and a method of protecting a coating film, and more specifically, for example, to a removable pressure sensitive adhesive sheet for a coating film which neither deteriorates nor discolors an incompletely cured coating film applied to the body or parts of an automobile, and is also excellent in removability after having been stuck for a long time period, and a method of protecting a coating film.
The removable pressure sensitive adhesive sheet of the present invention is a removable pressure sensitive adhesive sheet applicable to a coating film which is dried to such an insufficient extent that a slight amount of a solvent remains in the coating film or a coating film which is insufficiently cured after having been dried. The removable pressure sensitive adhesive sheet is particularly useful as a removable pressure sensitive adhesive sheet for protecting a coating film for a plastic part coated with a urethane-based paint, such as a bumper.

### Background Art

There occurs in the transport of an automobile such inconvenience as a coating film for the body or parts of the automobile becomes lackluster, discolors, or is damaged owing to contact with a suspended solid such as dust, dirt, rain, or pollen, a colliding substance such as sand, and workers. Attempts have been made to apply a wax-based material, or to stick a protective sheet, to the coating film for the body or parts of the automobile for preventing such inconvenience.
However, in curing of the coating film applied to the body or parts by heating, the curing reaction of the coating film may not proceed sufficiently even after the coating film has been passed through a drying furnace.
In particular, a bumper as one of the parts of the automobile has been made of a synthetic resin instead of a metal that has been conventionally used in order that the weight of the bumper may be reduced, and the bumper made of a synthetic resin is typically coated in order that the external appearance of the bumper is beautiful. Attempts have been made to stick a protective sheet to the bumper made of a synthetic resin as well for preventing such inconvenience as described above.
However, in curing of the coating film applied to the bumper made of a synthetic resin by heating, the curing temperature cannot be increased so that the resin may not be adversely affected, for example, may not be deteriorated or deformed. Accordingly, even after the bumper made of a resin coated with the coating film has been passed through a drying furnace, a slight amount of a solvent may remain in the coating film owing to insufficient drying, or a curing reaction may not proceed sufficiently in the coating film.
When the protective sheet is stuck to the coating film in such state, such problem as "steps (phenomenon in which a fine crease or deformation caused by rising which has occurred in the protective sheet is transferred onto the coating film at the time of the sticking of the sheet so that the coating film may deform)" or "bleaching (phenomenon in which the composition of the coating film is biased by compatibility with the pressure sensitive adhesive layer of the sheet and the coating film looks white upon release of the sheet) " arises.
As the protective sheet for the coating film, there have been proposed a product obtained by providing a polyisobutylene-based pressure sensitive adhesive layer on a supporting substrate (for example, Patent Document 1), a product obtained by providing, on a supporting substrate, a pressure sensitive adhesive layer formed of a butyl rubber or styrene-ethylene/butylene copolymer-styrene (for example, Patent Document 2), a product obtained by providing, on a supporting substrate, a layer formed of a composition prepared by mixing a polyisobutylene-based pressure sensitive adhesive with a small amount of an acrylic pressure sensitive adhesive (for example, Patent Document 3), a product obtained by providing, on a supporting substrate, a layer formed of a composition prepared by blending an acrylic pressure sensitive adhesive with a polyfunctional isocyanate compound (for example, Patent Document 4), a product obtained by providing an ethylene-vinyl acetate-glycidyl methacrylate copolymer on a supporting substrate (for example, Patent Document 5), and a product obtained by providing, on a supporting substrate, a pressure sensitive adhesive layer obtained by the photo-curing of a resin mainly formed of an ionomer obtained by bonding molecules of an ethylene-methacrylic acid copolymer with a metal ion (for example, Patent Document 6).
However, the performance of a protective sheet for a urethane-based coating film for an automobile having such a pressure sensitive adhesive layer as described above is still insufficient.
Further, the use of pressure sensitive adhesives or adhesives mainly formed of various silicone-based compounds has been proposed in recent years (for example, Patent Documents 7 to 10). However, none of the documents pays attention to the viscoelasticity of a pressure sensitive adhesive layer. Moreover, none of the documents discloses a removable pressure sensitive adhesive sheet to be stuck to such incompletely cured coating film as described above.

Patent Document 1: JP 2701020 B
Patent Document 2: JP 3668322 B
Patent Document 3: JP 2832565 B
Patent Document 4: JP 3342977 B
Patent Document 5: JP 10-121002 A
Patent Document 6: JP 10-121010 A
Patent Document 7: JP 3751186 B
Patent Document 8: JP 2004-190013 A
Patent Document 9: JP 2006-28311 A
Patent Document 10: JP 2006-193598 A

### Disclosure of the Invention

### Problems to be solved by the Invention

In view of such circumstances, an object of the present invention is to provide a removable pressure sensitive adhesive sheet that causes neither the "steps" nor the "bleaching" after having been stuck to the surface of a coating film dried to such an insufficient extent that a slight amount of a solvent remains in the coating film or the coating film is incompletely cured after having been dried.

### Means for solving the Problems

The inventors of the present invention have made various studies. As a result, the inventors have found that the use of a removable pressure sensitive adhesive sheet having a pressure sensitive adhesive layer whose storage elastic modulus at 23°C and 80°C are each a certain value or more can protect an incompletely cured coating film without causing the "steps", the "bleaching", or the like. Thus, the inventors have completed the present invention.

That is, the present invention provides the following items (1) to (6):
(1) A removable pressure sensitive adhesive sheet to be stuck to a coating film, which comprises the pressure sensitive adhesive layer having a storage elastic modulus at 23°C of 1.0×10⁵ Pa or more and a storage elastic modulus at 80°C of 0.4×10⁵ Pa or more;
(2) The removable pressure sensitive adhesive sheet according to the above item (1), in which the pressure sensitive adhesive layer is formed of an addition reaction type silicone-based pressure sensitive adhesive or a peroxide curable silicone-based pressure sensitive adhesive;
(3) The removable pressure sensitive adhesive sheet according to the above item (1), in which the pressure sensitive adhesive layer comprises a pressure sensitive adhesive layer obtained by cross-linking a layer formed of a composition through irradiation with active energy beams, the composition containing an active hydrogen free acrylic homopolymer or copolymer containing at least one kind selected from butyl(meth)acrylate, 2-ethylhexyl(meth)acrylate, and isooctyl(meth)acrylate as a monomer component, and a urethane (meth)acrylate;
(4) the removable pressure sensitive adhesive sheet according to the above item (1), in which the pressure sensitive adhesive layer contains a resin obtained by cross-linking a copolymer having unsaturated groups at its side chains through irradiation with active energy beams, and the copolymer contains at least one kind selected from butyl(meth)acrylate, 2-ethylhexyl(meth)acrylate, and isooctyl(meth)acrylate as a monomer component;
(5) The removable pressure sensitive adhesive sheet according to the above item (1), in which the substrate sheet includes a polyethylene terephthalate sheet; and
(6) A method of protecting an incompletely cured coating film, the method comprising sticking, to the incompletely cured coating film, a removable pressure sensitive adhesive sheet obtained by providing a substrate sheet with a pressure sensitive adhesive layer having a storage elastic modulus at 23°C of 1.0×10⁵ Pa or more and a storage elastic modulus at 80°C of 0.4×10⁵ Pa or more.

### Effect by the Invention

According to the present invention, there can be provided a removable pressure sensitive adhesive sheet which hardly deteriorates or discolors a coating film dried to such an insufficient extent that a slight amount of a solvent remains in the coating film or the coating film is incompletely cured immediately after having been dried, and is excellent in removability after having been stuck for a long time period. The removable pressure sensitive adhesive sheet is useful as, for example, a removable pressure sensitive adhesive sheet for a coating film in a plastic part such as a body or bumper of an automobile.

### Best Mode for carrying out the Invention

Hereinafter, a removable pressure sensitive adhesive sheet to be stuck to a coating film of the present invention is described in detail.
A pressure sensitive adhesive layer in the removable pressure sensitive adhesive sheet of the present invention has a storage elastic modulus at 23°C of 1.0×10⁵ Pa or more and, preferably 2.0×10⁵ Pa or more, and a storage elastic modulus at 80°C of 0.4×10⁵ Pa or more and, preferably 0.6×10⁵ Pa or more. Setting the storage elastic modulus at 23°C to 1. 0×10⁵ Pa or more and the storage elastic modulus at 80°C to 0.4×10⁵ Pa or more can prevent the occurrence of the "steps" or the "bleaching" in an incompletely cured coating film.
A storage elastic modulus (G') in the present invention is measured with a cylindrical test piece formed of a pressure sensitive adhesive, and having a diameter of 8 mm and a thickness of 3 mm by a torsional shearing method at a frequency of 1 Hz. An upper limit for the storage elastic modulus at 23°C is about 50.0×10⁵ Pa, and an upper limit for the storage elastic modulus at 80°C is about 20% of the storage elastic modulus at 23°C. The case where the storage elastic modulus at 23°C unnecessarily increases is not preferred because the tack or initial pressure sensitive adhesive force of the pressure sensitive adhesive layer reduces so that the pressure sensitive adhesive sheet may be apt to be peeled off.
For example, a dynamic viscoelasticity measuring apparatus DYNAMIC ANALYZER "Model RDA II", "Model itk DVA-200", or "Model RDS-II" manufactured by Rheometric Scientific, Inc., or a dynamic viscoelasticity measuring apparatus "Model DVA-200" manufactured by IT Measurement and Control Co. is used as a measuring apparatus for storage elastic modulus.

An addition reaction type silicone-based pressure sensitive adhesive [which may hereinafter be referred to as "pressure sensitive adhesive A"], a peroxide curable silicone-based pressure sensitive adhesive [which may hereinafter be referred to as "pressure sensitive adhesive B"], a pressure sensitive adhesive formed of a composition containing an acrylic homopolymer or copolymer containing at least one kind selected from butyl(meth)acrylate, 2-ethylhexyl (meth) acrylate, and isooctyl(meth)acrylate as a monomer component and free of an active hydrogen, and a urethane (meth) acrylate [which may hereinafter be referred to as "pressure sensitive adhesive C"], and a pressure sensitive adhesive containing a resin obtained by cross-linking a copolymer having unsaturated groups at its side chains through irradiation with active energy beams, the copolymer being formed of a polymer containing at least one kind selected from butyl (meth) acrylate, 2-ethylhexyl(meth)acrylate, and isooctyl(meth)acrylate as a monomer component [which may hereinafter be referred to as "pressure sensitive adhesive D"], are each preferably used as a pressure sensitive adhesive of which the pressure sensitive adhesive layer having a storage elastic modulus at 23°C of 1.0×10⁵ Pa or more and a storage elastic modulus at 80°C of 0.4×10⁵ Pa or more can be formed.

One preferred pressure sensitive adhesive for forming the pressure sensitive adhesive layer having a storage elastic modulus at 23°C of 1.0×10⁵ Pa or more and a storage elastic modulus at 80°C of 0.4×10⁵ Pa or more in the present invention is the addition reaction type silicone-based pressure sensitive adhesive.
Hereinafter, the addition reaction type silicone-based pressure sensitive adhesive (pressure sensitive adhesive A) is described in detail.
The addition reaction type silicone-based pressure sensitive adhesive is formed of a main agent and a cross-linking agent, and has the advantage, that is, the pressure sensitive adhesive can be used after having been subjected only to primary curing at low temperatures, and does not require secondary curing at high temperatures.
The addition reaction type silicone-based pressure sensitive adhesive is typically formed of the main agent formed of a mixture of a silicone resin component and a silicone rubber component and the cross-linking agent containing a hydrosilyl group (SiH group), and a curing catalyst to be optionally used.
Of those, the silicone resin component is an organopolysiloxane of a network structure obtained by hydrolyzing an organochlorosilane or an organoalkoxysilane and subjecting the resultant to a dehydration condensation reaction. The silicone rubber component is a diorganopolysiloxane having a linear structure. As an organo group contained in the silicone resin component and silicone rubber component, there are exemplified a methyl group, an ethyl group, a propyl group, a butyl group, and a phenyl group. The above organo group is partially substituted by an unsaturated group such as a vinyl group, a hexenyl group, an allyl group, a butenyl group, a pentenyl group, an octenyl group, a (meth)acryloyl group, a (meth)acryloylmethyl group, a (meth)acryloylpropyl group, and a cyclohexenyl group. Those having a vinyl group which are industrially easily available are preferred.
In such pressure sensitive adhesive containing an addition reaction type silicone, cross-linking proceeds by virtue of an addition reaction between an unsaturated group and a hydrosilyl group so that the network structure may be formed. As a result, pressure sensitive adhesiveness is expressed.
With regard to a blending ratio between the silicone resin component and the silicone rubber component, the latter is used in an amount of typically 250 parts by mass or less with respect to 100 parts by mass of the former. Setting the amount of the latter to 250 parts by mass or less prevents an incompletely cured coating film that has been applied from being adversely affected.

Specific examples of the addition reaction type silicone-based pressure sensitive adhesive which may be used include an addition reaction typesilicone-based pressuresensitive adhesive such as X-40-3068, X-40-3103, X-40-3104, X-40-3102, X-40-3229, KR-3700,and X-40-3098manufactured byShin-Etsu Chemical Co., Ltd., a methyl-based addition reaction type silicone pressure sensitive adhesive such as TSR 1516 manufactured by GE Toshiba Silicones Co. , Ltd., a methylphenyl-based silicone pressure sensitive adhesive such as XR37-B9204 and XR37-B6722 manufactured by GE Toshiba Silicones Co., Ltd., and an addition reaction type silicone-based pressure sensitive adhesive such as SD 4560, SD 4570, SD 4580, SD 4584, SD 4585, SD 4587L, SD 4592, and BY 24-740 manufactured by Dow Corning Toray Co., Ltd.

The curing catalyst as well as the addition reaction type silicone component (formed of the silicone resin component and the silicone rubber component) and the cross-linking agent described above is preferably blended.
The curing catalyst is used for promoting a hydrosilylation reaction between an unsaturated group in the silicone resin component or the silicone rubber component and an Si-H group in the cross-linking agent.

Examples of the curing catalyst include platinum-based catalysts, i.e., chloroplatinic acid, a solution of chloroplatinic acid in an alcohol, a product of a reaction between chloroplatinic acid and an alcohol solution, a product of a reaction between chloroplatinic acid and an olefin compound, a product of a reaction between chloroplatinic acid and a vinyl group-containing siloxane compound, a platinum-olefin complex, a platinum-vinyl group-containing siloxane complex, and a platinum-phosphorus complex. Specific examples of such curing catalyst as described above are described in, for example, JP 2006-28311 A and JP 10-147758 A.
More specific examples of the catalyst include commercially available products such as an SRX-212 manufactured by Dow Corning Toray Co., Ltd. and a PL-50T manufactured by Shin-Etsu Chemical Co., Ltd.

The ratio at which the curing catalyst is blended in terms of platinum is typically 5 to 4,000 ppm and preferably 10 to 1, 000 ppm with respect to the total amount of the silicone-based resin component and the silicone rubber component. Setting the ratio to 5 ppm or more prevents a reduction in cross-linking density, i.e., reductions in pressure sensitive adhesive force and cohesive force (holding power) brought forth a reduction in curability. Setting the ratio to 2, 000 ppm or less can not only prevent an increase in cost but also retain the stability of the pressure sensitive adhesive layer, and prevents the excessively used curing catalyst from adversely affecting an incompletely cured coating film that has been applied to a car body or the like.

Any one of the various additives as well as the above components can be added as an arbitrary component to the addition reaction type silicone-based pressure sensitive adhesive in the present invention to such an extent that characteristics needed for the removable pressure sensitive adhesive sheet are not impaired. Examples of the additives include : non-reactive polyorganosiloxanes such as dimethylsiloxane and dimethyldiphenylsiloxane; phenol-based and other antioxidants; benzotriazole-based light stabilizers; phosphate-basedandother flame retardants; antistatic agents such as a cationic surfactant; inert solvents such as toluene and xylene used for lowering the viscosity of the pressure sensitive adhesive upon application of the pressure sensitive adhesive; colorants; and fillers.

Although such addition reaction type silicone-based pressure sensitive adhesive in the present invention as described above expresses its pressure sensitive adhesive force even at normal temperature by blending the above respective components, it is preferred in terms of the stability of the pressure sensitive adhesive force that the pressure sensitive adhesive is applied to a substrate sheet or release sheet to be described later so that both the sheets may be stuck to each other, and then the resultant is heated or irradiated with active energy beams so that a cross-linking reaction between the silicone resin component and the silicone rubber component by the cross-linking agent may be promoted.
When the curing (cross-linking) is promoted by the heating, the heating is performed at a heating temperature of typically 60 to 140°C and preferably 80 to 130°C for 1 to 15 minutes and preferably about 3 to 7 minutes. Heating at 60°C or higher can prevent the pressure sensitive adhesive force from becoming insufficient owing to insufficient cross-linking between the silicone resin component and the silicone rubber component. Heating at 140°C or lower can prevent the occurrence of a heat contraction crease in the substrate sheet or prevent the sheet from deteriorating or discoloring.
The curing (cross-linking) may be promoted by irradiation with active energy beams.
The term "active energy beams" refers to beams each having an energy quantum out of an electromagnetic wave and charged particle beams, i.e., active light such as ultraviolet rays, electron beams, or the like. When the cross-linking is performed by irradiation with the electron beams, no photopolymerization initiator is needed. However, when the cross-linking is performed by irradiation with the active light such as ultraviolet rays, a photopolymerization initiator is preferably caused to exist.
When the cross-linking is performed by irradiation with the electron beams as one kind of active energy beam, an accelerating voltage for the electron beams is generally 130 to 300 kV and preferably 150 to 250 kV. Irradiation at an accelerating voltage of 130 kV or more can prevent the pressure sensitive adhesive force from becoming insufficient owing to insufficient cross-linking between the silicone resin component and the silicone rubber component. Irradiation at an accelerating voltage of 300 kV or less can prevent the pressure sensitive adhesive layer or the substrate sheet to be described later from deteriorating or discoloring. A beam current preferably falls within the range of 1 to 100 mA.
The dose of the electron beams to be applied is preferably 1 to 70 Mrad or more preferably 2 to 20 Mrad. Irradiation at a dose of 1 Mrad or more can prevent the pressure sensitive adhesiveness from becoming insufficient owing to insufficient cross-linking. Irradiation at a dose of 70 Mrad or less can prevent a reduction in cohesive force caused by the deterioration or discoloration of the pressure sensitive adhesive layer, and can prevent the substrate sheet from deteriorating or contracting.
The amount of irradiation in the case of irradiation with ultraviolet rays is appropriately selected. In this case, the light quantity is about 100 to 500 mJ/cm² and the illuminance is about 10 to 500 mW/cm².
The photopolymerization initiator when ultraviolet rays are applied is not particularly limited, and an arbitrary one appropriately selected from those conventionally used inultraviolet ray-curable resins can be used. Examplesofthe photopolymerization initiator include benzoins, benzophenones, acetophenones, α-hydroxy ketones, α-amino ketones, α-diketones, α-diketone dialkyl acetals, anthraquinones, thioxanthones, and other compounds.
One kind of photopolymerization initiator may be used alone, or two or more kinds of the initiators may be used in combination. In addition, the usage of any such photopolymerization initiator is selected from the range of typically 0.01 to 30 parts by mass and preferably 0.05 to 20 parts by mass with respect to 100 parts by mass of the total amount of the addition reaction type silicone component used as the main agent and the cross-linking agent.
The heating or the irradiation with the active energy beams is preferably performed under a nitrogen atmosphere or in a state where the substrate sheet and the release sheet are stuck to each other and oxygen is shielded in order that the inhibition of the reaction caused by oxygen may be prevented.

Another preferred pressure sensitive adhesive for forming the pressure sensitive adhesive layer having a storage elastic modulus at 23°C of 1.0×10⁵ Pa or more and a storage elastic modulus at 80°C of 0.4×10⁵ Pa or more in the present invention is the peroxide curable silicone-based pressure sensitive adhesive (pressure sensitive adhesive B).
Hereinafter, the peroxide curable silicone-based pressure sensitive adhesive is described in detail.
The peroxide curable silicone-based pressure sensitive adhesive used in the present invention is formed of a silicone rubber as a long-chain polymer of polydimethylsiloxane and a silicone resin of a three-dimensional structure. An organic peroxide such as benzoyl peroxide is used for cross-linking the base resin.
In the peroxide curable silicone-based pressure sensitive adhesive used in the present invention, radicals generated from the organic peroxide each extract hydrogen from an Si-CH₃ group of the silicone rubber, and prepared SiCH₂ radicals are bonded to each other. As a result, a cross-linking reaction proceeds.
The peroxide curable silicone-based pressure sensitive adhesive used in the present invention exerts its effect when the pressure sensitive adhesive is applied to the substrate sheet to be described later through a primer layer containing an ultraviolet ray absorbent or the like, or when the substrate sheet contains an ultraviolet ray absorbent or the like because no curing inhibition occurs. It should be noted that, in the present invention, the primer layer is formed for improving the weatherability of each of the substrate and the pressure sensitive adhesive layer and for improving adhesiveness between the substrate sheet and the pressure sensitive adhesive layer, and a weathering assistant such as an ultraviolet ray absorbent or a light stabilizer can be incorporated into the primer layer.

There may be incorporated an ultraviolet ray absorbent such as a benzophenone-based, benzotriazole-based, triazine-based, or cyanoacrylate-based absorbents, or a polymer type ultraviolet ray absorbent in which (meth) acrylates having a characteristic group of the above compounds on its side chain are polymerized.
There may be incorporated a light stabilizer such as hindered amine-based HALS or a hindered phenol-based light stabilizer.

Examples of commercially available peroxide curable silicone-based pressure sensitive adhesives include YR3340 manufactured by GE Toshiba Silicones Co., Ltd., SE4200 and SH4280 manufactured by Dow Corning Toray Co. , Ltd., and KR-100, KR-101-10 (tolulenesolvent-type), KR-120, KR-130,and X-40-3287 (isoparaffin solvent-type) manufactured by Shin-Etsu Chemical Co., Ltd.
As examples of peroxides, organic peroxides are used. Examples of the organic peroxides include benzoyl peroxides (such as t-butylbenzoate peroxide, 2,5-dimethyl-2,5-di(benzoylperoxy)-hexane, dibenzoyl peroxide, 4,4'-dimethyldibenzoyl peroxide, 3,3'-dimethyldibenzoylperoxide, 2,2'-dimethyldibenzoyl peroxide, 2,2',4,4'-tetrachlorodibenzoyl peroxide, and 2,4-dichlorobenzoyl peroxide), cumyl peroxide, t-butylcumyl peroxide, t-butyl peroxide, t-butyl isobutylate peroxide, t-butyl-2-ethylhexanoate peroxide, 2,2-bis(t-butylperoxy)octane, and 1,1-bis(t-butylperoxy)cyclohexane.
The benzoyl peroxides are each preferably used from the viewpoint that a pressure sensitive adhesive characteristic can be adjusted by changing the addition amount of any such peroxide.
The organic peroxide is used in an amount of typically 0.01 to 10 parts by mass and preferably 0.1 to 5 parts by mass with respect to 100 parts by mass of the peroxide curable silicone-based pressure sensitive adhesive. Setting the amount to 0.01 part by mass or more provides a desired pressure sensitive adhesive force. Setting the amount to 10 parts by mass or less prevents an inability to obtain a desired pressure sensitive adhesive force brought forth an excessively proceeding curing reaction.

Because the above peroxide curable silicone-based pressure sensitive adhesive is commercially available as a solution in an organic solvent having a concentration of about 30 to 70% by mass such as a paraffin-based solvent, e. g. , hexane or an aromatic solvent, e.g., toluene in ordinary cases, the organic peroxide is dissolved in the solution, and the resultant is used as a coating liquid.
In order that the pressure sensitive adhesive layer may be formed, the coating liquid containing the peroxide curable silicone-based pressure sensitive adhesive is applied to the substrate sheet or the release sheet to be described later, and the solvent is evaporated. After that, the resultant is cured by heating so that the pressure sensitive adhesive layer may be formed.
The curing by heating is performed at typically about 130 to 200°C and preferably 140 to 180°C for 1 to 15 minutes and preferably about 3 to 7 minutes.
Heating at 130 °C or higher can prevent the pressure sensitive adhesive force from becoming insufficient owing to insufficient curing. Heating at 200°C or lower can prevent the occurrence of a heat contraction crease in the substrate sheet or prevent the sheet from deteriorating or discoloring.

Another preferred pressure sensitive adhesive for forming the pressure sensitive adhesive layer having a storage elastic modulus at 23°C of 10×10⁵ Pa or more and a storage elastic modulus at 80°C of 0.4×10⁵ Pa or more in the present invention is a resin (pressure sensitive adhesive C) obtained by cross-linking a layer formed of a composition containing an acrylic homopolymer or copolymer containing at least one kind selected from a butyl(meth)acrylate, a 2-ethylhexyl(meth)acrylate, and an isooctyl (meth) acrylate as a monomer component and free of an active hydrogen, and a urethane (meth)acrylate through irradiation with active energy beams.
Hereinafter, the pressure sensitive adhesive C is described in detail.
Of those, the acrylic (co)polymer free of an active hydrogen contains at least one kind selected from a butyl(meth)acrylate, a 2-ethylhexyl(meth)acrylate, and an isooctyl(meth)acrylate as a monomer component, and is obtained by subjecting the at least one kind to radical (co)polymerization with any other optional polymerizable monomer free of an active hydrogen. A n-butyl (meth) acrylate or an isobutyl (meth) acrylate can be used as a butyl(meth)acrylate.
Examples of other optional polymerizable monomers free of an active hydrogen include (meth)acrylates having aliphatic groups such as a methyl(meth)acrylate, an ethyl(meth)acrylate, a propyl(meth)acrylate, a pentyl(meth)acrylate, a hexyl(meth)acrylate, a n-octyl(meth)acrylate, a decyl(meth)acrylate, an isodecyl(meth)acrylate, a lauryl(meth)acrylate, and a butoxyethyl(meth)acrylate, (meth)acrylates having aromatic groups such as a benzyl (meth) acrylate, (meth) acrylates having alicyclic groups such as a cyclohexyl (meth) acrylate, acrylonitrile, and vinyl esters such as vinylacetate and vinylbutyrate.
In the present invention, there is not used a polymerizable monomer having an active hydrogen such as a hydroxyalkyl (meth) acrylate or a (meth) acrylic acid which has been used in a conventional acrylic pressure sensitive adhesive. Other examples of the polymerizable monomer having an active hydrogen which is not used in the present invention include: polymerizable monomers each having a hydroxyl group except the hydroxyalkyl(meth)acrylate; polymerizable monomers each having a carboxyl group except a (meth)acrylic acid; and polymerizable monomers each having a functional group such as an amino group or a monosubstituted amino group. The use of any such polymerizable monomer allows an active hydrogen to exist in the pressure sensitive adhesive. Accordingly, in the case where the removable pressure sensitive adhesive sheet is stuck to a coating film, a problem such as the "bleaching" of the coating film may occur even when the coating film is dried to such a sufficient extent that no solvent remains and the curing of the coating film proceeds sufficiently. This is probably because an active hydrogen present in the pressure sensitive adhesive layer has an affinity for the coating film.
For example, when the curing of a urethane coating film does not proceed sufficiently, such an active hydrogen as described above reacts with a slight amount of an isocyanate group remaining in the incompletely cured urethane coating film, and hence a problem occurring in the coating film becomes more severe.

A copolymerization molar ratio between at least one of the above three monomer components such as butyl (meth) acrylate and the other polymerizable monomer free of an active hydrogen "former/latter" is 1/0 to 1/1, and preferably 1/0 to 1/0.2. Setting the copolymerization molar ratio within the above range can maintain the glass transition temperature of the resultant acrylic (co)polymer within a proper range, and can minimize an influence on a urethane-based coating film. Accordingly, a coating film to which the removable pressure sensitive adhesive sheet is stuck is not adversely affected.

An ordinary radical polymerization method that has been conventionally performed is applicable to the production of the acrylic (co)polymer.
For example, a solution of the acrylic (co) polymer in an organic solvent is obtained by dissolving such monomers as described hereinabove in a hydrocarbon-based organic solvent free of an active hydrogen such as toluene or xylene or an ester-based organic solvent similarly free of an active hydrogen such as ethyl acetate, mixing a polymerization initiator such as azobisisobutyronitrile, azobisisovaleronitrile, or benzoyl peroxide into the solution, and subjecting the mixture to radical polymerization in a reflux state under heating at about 50 to 90°C for about 3 to 20 hours.
Bulk polymerization may be performed with the polymerizable monomers and the polymerization initiator alone without using any organic solvents. Alternatively, the polymerization may be performed by an emulsion polymerization. When the acrylic (co)polymer is obtained in the form of a solution in an organic solvent, the solution may be used after having been blended as it is with the urethane (meth)acrylate to be described later, or the solution may be blended after part or the whole of the organic solvent has been removed.
The acrylic (co) polymer has a weight-average molecular weight of typically 200, 000 or more, preferably 400, 000 to 2, 000, 000, and more preferably 500,000 to 1,000,000. In addition, the acrylic (co)polymer has a glass transition temperature of typically -10°C or lower, and preferably -70 to -20°C.

Subsequently, there is described the urethane (meth)acrylate as another component of which the pressure sensitive adhesive C is formed.
The urethane (meth)acrylate has two or more (meth)acryloyl groups at its terminals and can be cross-linked by irradiation with active energy beams. The pressure sensitive adhesiveness is brought forth as a result of the cross-linking.
The urethane (meth)acrylate can be typically prepared by a two-stage reaction of one of the following two patterns.

The two-stage reaction of a first pattern is as described below.
First, a diisocyanate compound is caused to react with a diol so that a urethane prepolymer having one isocyanate group at each of its terminals may be synthesized. Subsequently, a hydroxyalkyl(meth)acrylate or a (meth)acrylic monool of any one of the various polyols is caused to react with the urethane prepolymer so that the one isocyanate group present at each of both the terminals may be transformed into a (meth) acryloyl group. As a result, there is obtained a urethane (meth)acrylate having one (meth)acryloyl group at each of both terminals.

The two-stage reaction of a second pattern is as described below.
First, a hydroxyalkyl(meth)acrylate or a (meth)acrylicmonool of any one of the various polyols and a diisocyanate compound are caused to react with each other so that there may be synthesized an isocyanate group-containing (meth)acrylate having an isocyanate group at one terminal and a (meth)acryloyl group at the another terminal. Subsequently, the isocyanate group-containing (meth)acrylate is caused to react with a diol. As a result, there is obtained a urethane (meth)acrylate having one (meth)acryloyl group at each of both terminals.

The two-stage reactions of both patterns described above are each a reaction between a hydroxyl group and an isocyanate group, and are each performed in the presence of an organic solvent inert to the isocyanate group, that is, a hydrocarbon-based or ester-based organic solvent, with a general urethanating catalyst such as dibutyltin dilaurate or dibutyltin diethylhexoate in the temperature range of typically 10 to 100°C and preferably 30 to 90°C for a consecutive time period of about 1 to 5 hours.
The use amount of the urethanating catalyst is typically 50 to 1,000 ppm and preferably 50 to 500 ppm based on the total mass of the raw materials subjected to the reaction. The use amount of the urethanating catalys is preferably as small as possible from the viewpoint of the alleviation of an influence on a coating film caused by the release of the removable pressure sensitive adhesive sheet of the present invention stuck to the coating film.
In addition, a reaction in which a (meth) acrylate is present is preferably performed in the presence of air or oxygen for the purpose of preventing the polymerization of a (meth) acryloyl group. The reaction may be performed by adding a polymerization inhibitor that has been generally used such as hydroquinone or hydroquinone monomethyl ether.
The two-stage reaction of the first pattern in which one heating hysteresis for a hydroxyalkyl(meth)acrylate or the like suffices is preferred from the viewpoint of utmost prevention of the polymerization of the hydroxyalkyl(meth)acrylate or the like.

Examples of diols include various types of glycols having relatively low-molecular weight such as 1,3-butylene glycol, 1,4-butylene glycol, 1,6-hexanediol, neopentyl glycol, ethylene glycol, diethylene glycol, propylene glycol, and dipropylene glycol, polyester diols such as lactone diol, and polyether diols such as polytetramethylene glycol. Two or more kinds of those diols may be used in mixture.

Alternatively, part of the above diol may be turned into a polyol which is trifunctional or more such as trimethylolpropane or pentaerythritol. When the polyol which is trifunctional or more is added, part of the urethane (meth) acrylate in the present invention each have a total of three or more (meth)acryloyl groups at its terminals. As a result, when the cross-linking is performed by irradiation with active energy beams, a cross-linking density in the pressure sensitive adhesive, that is, pressure sensitive adhesiveness can be prepared.

When the urethane (meth)acrylate in the present invention is prepared in a state where the polyol which is trifunctional or more supplants part of the diol, a molar ratio between the respective components must be severely adjusted in each of the two-stage reactions of the two patterns described hereinabove. The severe adjustment of the molar ratio can reduce the amount of an active hydrogen present in the resultant urethane (meth) acrylate to the extent possible.
As in the case of the acrylic (co)polymer free of an active hydrogen, a urethane (meth) acrylate free of an active hydrogen such as a hydroxyl group or a urethane (meth) acrylate in which the amount of an active hydrogen is reduced to the extent possible is preferably used as the urethane (meth)acrylate in the present invention.

Examples of diisocyanate compounds include tolylene diisocyanate, hydrogenated tolylene diisocyanate, hexamethylene diisocyanate, trimethylhexamethylene diisocyanate, xylene diisocyanate, diphenylmethane diisocyanate, paraphenylene diisocyanate, naphthalene diisocyanate, and isophorone diisocyanate. Of those diisocyanate compounds, from the viewpoint of ease of availability, hexamethylene diisocyanate is preferably used. Two or more kinds of those diisocyanate compounds may be used in mixture.

Examples of hydroxyalkyl(meth)acrylates include a hydroxymethyl (meth) acrylate, a hydroxyethyl(meth)acrylate, a hydroxypropyl (meth) acrylate, and a hydroxybutyl (meth) acrylate. Two or more kinds of those hydroxyalkyl (meth) acrylates may be used in mixture.

Examples of (meth)acrylic monools include an ethyleneglycol mono (meth) acrylate, a propyleneglycol mono(meth)acrylate, a tetramethyleneglycol mono (meth) acrylate, a neopentylglycol mono(meth)acrylate, a trimethylolpropane di (meth) acrylate, and a pentaerythrytoltri(meth)acrylate. Two or more kinds of those (meth) acrylates may be used in mixture. Of those hydroxyalkyl (meth)acrylates and (meth)acrylic monools, from the viewpoint of ease of availability, a hydroxyethyl(meth)acrylate is preferably used.
Any commercially available products may be used as the urethane (meth)acrylate of the present invention.
Examples of the commercially available urethane (meth)acrylates include Shiko UV-1400B, Shiko UV-1700B, Shiko UV-6300B, and Shiko UV-7550B manufactured by Nippon Synthetic Chemical Industry Co. , Ltd., and BEAMSET 575 manufactured by Arakawa Chemical Industries Ltd.

The weight average molecular weight of the urethane (meth) acrylate is usually 1,000 to 50,000, preferably 1,000 to 30, 000, and more preferably 3,000 to 10,000.

With regard to a blending ratio between the acrylic (co) polymer and the urethane (meth) acrylate in the present invention, the latter is used in an amount of typically 0.1 to 200 parts by mass, preferably 0.5 to 100 parts by mass, and more preferably 1 to 50 parts by mass based on 100 parts by mass of the former. Setting the blending ratio "former/latter" within the above range can impart moderate pressure sensitive adhesiveness, flexibility, and removability to the pressure sensitive adhesive layer. As a result, no such problem as described above arises upon peeling off of the removable pressure sensitive adhesive sheet to be stuck to an incompletely cured coating film from a coating film.

In the case of the pressure sensitive adhesive C, a moderate pressure sensitive adhesive force and removability can be imparted by cross-linking through irradiation with active energy beams in a state where the pressure sensitive adhesive layer is formed on the release sheet or the substrate sheet to be described later or after both the sheets have been stuck to each other to form a laminate.
When ultraviolet rays are applied as the active energy beams, a photopolymerization initiator is added to the pressure sensitive adhesive C. The photopolymerization initiator is not particularly limited, and an arbitrary one appropriately selected from those conventionally used in ultraviolet ray-curable resins can be used. Examples of the photopolymerization initiator include benzoins, benzophenones, acetophenones, α-hydroxyketones, α-aminoketones, α-diketones, α-diketonedialkyl acetals, anthraquinones, thioxanthones, and other compounds.
One kind of photopolymerization initiator may be used alone, or two or more kinds of the initiators may be used in combination. In addition, the usage of any such photopolymerization initiator is selected from the range of typically 0.01 to 20 parts by mass and preferably 0.05 to 10 parts by mass with respect to 100 parts by mass of the urethane (meth)acrylate.
The irradiation with the active energy beams is preferably performed under a nitrogen atmosphere in order that the inhibition of the reaction caused by oxygen may be prevented.
The amount of irradiation and the like of the active energy beams are as described in the description for the pressure sensitive adhesive A.

Still another preferred pressure sensitive adhesive for forming the pressure sensitive adhesive layer having a storage elastic modulus at 23°C of 1.0×10⁵ Pa or more and a storage elastic modulus at 80°C of 0.4×10⁵ Pa or more in the present invention is a resin (pressure sensitive adhesive D) containing a resin obtained by cross-linking a copolymer having unsaturated groups at its side chains through irradiation with active energy beams, the copolymer containing at least one kind selected from a butyl(meth)acrylate, a 2-ethylhexyl(meth)acrylate, and an isooctyl(meth)acrylate as a monomer component.
Hereinafter, the pressure sensitive adhesive D is described in detail.
The copolymer having unsaturated groups at its side chains is prepared by, for example, the following procedure.
First, at least one kind selected from a butyl (meth) acrylate, a 2-ethylhexyl(meth)acrylate, and an isooctyl(meth)acrylate and a polymerizable monomer having an active hydrogen such as hydroxyethyl acrylate or acrylic acid, and, optionally, any other polymerizable monomer free of an active hydrogen are subjected to radical copolymerization, whereby, there is obtained a copolymer having a skeleton derived from each of the polymerizable monomers on its main chain and having an active hydrogen at any one of its side chains.
Subsequently, the isocyanate group of a monoisocyanate compound having a (meth) acryloyl group is caused to react with active hydrogens at a side chain in the copolymer,whereby, there can be obtained a copolymer having unsaturated groups [(meth)acryloyl groups] at its side chains. The copolymer is irradiated with active energy beams so as to cross-link. As a result, the pressure sensitive adhesive can be obtained.
It should be noted that there is also a method in which the polymerizable monomer having an active hydrogen such as hydroxyethyl acrylate or acrylic acid and the monoisocyanate compound having a (meth) acryloyl group are initially caused to react with each other, and the radical copolymerization is performed by using the resultant compound having (meth)acryloyl groups on both sides as a polymerizable monomer. In this case, however, a (meth)acryloyl group on one side must be masked in order that gelation may not occur at the time of the radical copolymerization.
Each of a n-butyl(meth)acrylate and an isobutyl(meth)acrylate can be used as butyl(meth)acrylate.

Examples of polymerizable monomers having an active hydrogen include compounds having functional groups such as a hydroxyl group, a carboxyl group, and an amino group.
Examples of polymerizable monomers having a hydroxyl group include hydroxyalkyl(meth)acrylates such as a hydroxyethyl (meth) acrylate, a hydroxypropyl(meth)acrylate, and a hydroxybutyl(meth)acrylate. Two or more kinds of those hydroxyalkyl(meth)acrylates may be used in mixture.

Examples of polymerizable monomers having a hydroxyl group, other than the hydroxyalkyl (meth) acrylate, include (meth)acrylic monools. Specific examples of the (meth)acrylic monools include an ethyleneglycol mono(meth)acrylate, a propyleneglycol mono(meth)acrylate, a tetramethyleneglycol mono(meth)acrylate, a neopentylglycol mono(meth)acrylate, a trimethylolpropane di(meth)acrylate, and a pentaerythrytol tri (meth) acrylate. Two or more kinds of those (meth)acrylicmonools may be used in mixture.

Examples of polymerizable monomers having an active hydrogen, other than those mentioned above, include, as compounds having a carboxyl group, unsaturated carboxylic acids such as including acrylic acid, methacrylic acid, maleic acid, fumaric acid, and itaconic acid. Examples of compounds having an amino group include a monomethyl aminoethyl(meth)acrylate, a monoethyl aminoethyl(meth)acrylate, acrylamide, and methacrylamide. Of those polymerizable monomers having an active hydrogen, from the viewpoint of ease of availability and radical polymerizability, a hydroxyethyl(meth)acrylate is preferably used.
Further, monomers having an epoxy group, other than those polymerizable monomers having an active hydrogen mentioned above, may also be used. Specific examples thereof include a glycidyl(meth)acrylate, a 3,4-cyclohexyl methyl(meth)acrylate, and a lactone modified 3,4-cyclohexyl methyl (meth) acrylate.

Examples of other polymerizable monomers free of an active hydrogen and being optionally used include (meth)acrylates having aliphatic groups such as a methyl(meth)acrylate, an ethyl(meth)acrylate, a propyl(meth)acrylate, a pentyl(meth)acrylate, a hexyl(meth)acrylate, a decyl(meth)acrylate, an isodecyl(meth)acrylate, a lauryl (meth)acrylate, and a butoxyethyl(meth)acrylate, (meth)acrylates having aromatic groups such as a benzyl(meth)acrylate, (meth)acrylates having alicyclic groups such as a cyclohexyl (meth) acrylate, acrylonitrile, and vinyl esters such as vinyl acetate and vinyl butyrate.

With regard to a copolymerization ratio between at least one of the above three monomer components such as a butyl (meth) acrylate and the polymerizable monomer having an active hydrogen, the latter is used in an amount of 0.1 to 50 mol and preferably 1 to 10 mol based on 100 mol in total of the former.
The content of the unsaturated groups at the side chains can be adjusted depending on the copolymerization ratio of the polymerizable monomer having an active hydrogen.
Setting the copolymerization ratio to 0.1 mol or more can increase the content of the unsaturated groups at the side chains to 0.1 mol or more. As a result, a cohesive force (holding power) brought forth by irradiation with active energy beams is expressed in the resultant copolymer. Setting the copolymerization ratio to 50 mol or less reduces the content of the unsaturated groups at the side chains to 50 mol or less, thereby preventing the pressure sensitive adhesiveness from becoming excessively low or preventing the flexibility of the pressure sensitive adhesive layer from being lost.

With regard to a copolymerization ratio between at least one of the above three monomer components such as butyl (meth) acrylate and the other polymerizable monomer free of an active hydrogen, the latter is used in an amount of 0 to 50 mol and preferably 0 to 10 mol with respect to 100 mol of the former. Setting the copolymerization ratio within the above range can maintain the glass transition temperature of the resultant copolymer within a proper range, and can minimize an influence on a urethane-based coating film caused by a pressure sensitive adhesive layer formed of a resin obtained by cross-linking a copolymer, in which an active hydrogen at a side chain is modified to an unsaturated group, through irradiation with active energy beams. Accordingly, a coating film to which the removable pressure sensitive adhesive sheet is stuck is not adversely affected.

An ordinary radical polymerization method that has been conventionally performed is applicable to the production of the copolymer.
For example, a solution of the copolymer in an organic solvent is obtained by dissolving such monomers as described above in a hydrocarbon-based organic solvent free of an active hydrogen such as toluene or xylene or an ester-based organic solvent similarly free of an active hydrogen such as ethyl acetate, mixing a polymerization initiator such as azobisisobutyronitrile, azobisisovaleronitrile, or benzoyl peroxide into the solution, and subjecting the mixture to radical polymerization in a reflux state under heating at about 50 to 90°C for about 3 to 20 hours.
Bulk polymerization may be performed with the polymerizable monomers and the polymerization initiator alone without using any organic solvent. When the copolymer is obtained in the form of a solution in an organic solvent, the solution may be caused to react as it is with the monoisocyanate compound having a (meth)acryloyl group or after the organic solvent has been partially or wholly removed from the solution, for example, a hydrocarbon-based or ester-based organic solvent inert to an isocyanate group may be newly added to the remainder to cause the mixture to react with the compound.
The reaction is a reaction between a hydroxyl group, a carboxyl group, or the like and an isocyanate group, and is performed with a general urethanating reaction catalyst such as dibutyltin dilaurate or dibutyltin diethylhexoate in the temperature range of typically 10 to 100°C and preferably 30 to 90°C for a consecutive time period of about 1 to 10 hours.
The ratio at which the urethanating reaction catalyst is used is typically 50 to 1, 000 ppm and preferably 50 to 500 ppm with reference to the total mass of the raw materials subjected to the reaction. The ratio at which the urethanating reaction catalyst is used is preferably as small as possible from the viewpoint of the alleviation of an influence on an incompletely cured coating film caused by the release of the removable pressure sensitive adhesive sheet of the present invention stuck to the coating film.

The copolymer has a weight average molecular weight of usually 200,000 or more, preferably 400,000 to 2, 000, 000, and more preferably 500,000 to 1,000,000.

Any one of the various additives as well as the above copolymer having unsaturated groups at its side chains can be added as an arbitrary component to the pressure sensitive adhesive D in the present invention to such an extent that characteristics needed for the removable pressure sensitive adhesive sheet are not impaired. Examples of the additives include: antioxidants; benzotriazole-based light stabilizers; phosphate-based and other flame retardants; antistatic agents such as a cationic surfactant; inert solvents such as toluene and xylene used for lowering the viscosity of the pressure sensitive adhesive upon application of the pressure sensitive adhesive; colorants; and fillers.
It should be noted that the photopolymerization initiator described for the pressure sensitive adhesive C is used when the cross-linking is performed by using active energy beams.

When the pressure sensitive adhesive D is used, a removable pressure sensitive adhesive sheet having a moderate pressure sensitive adhesive force and removability is obtained by blending the above respective components, applying the blend to the release sheet to be described later and sticking the resultant to the substrate sheet, or applying the blend to the substrate sheet and sticking the resultant to the release sheet, to form a laminate, and heating the laminate, or irradiating the laminate with active energy beams, to cross-link the laminate.
The heating or the irradiation with the active energy beams is as described in the description for the pressure sensitive adhesive A.

A pressure sensitive adhesive except the above four kinds of pressure sensitive adhesives A to D can be appropriately used as long as the pressure sensitive adhesive has a storage elastic modulus at 23°C of 1.0×10⁵ Pa or more and a storage elastic modulus at 80°C of 0.4×10⁵ Pa or more.
Examples of pressure sensitive adhesives other than those A to D mentioned above include rubber-based pressure sensitive adhesives formed of, for example, styrene-isoprene-styrene, styrene-butadiene-styrene, and polyisobutylene, olefin-based pressure sensitive adhesives formed of polyethylene or the like, urethane-based pressure sensitive adhesives, and ester-based pressure sensitive adhesives.

Subsequently, the substrate sheet is described in detail.
The substrate sheet is similarly used for any one of the pressure sensitive adhesives A to D and any other pressure sensitive adhesive having a storage elastic modulus at 23°C of 1.0×10⁵ Pa or more and a storage elastic modulus at 80°C of 0.4×10⁵ Pa or more.
As the substrate sheet, a polyethylene terephthalate sheet, a polyethylene naphthalate sheet, a polyimide sheet, a polyetherimide sheet, a polyaramide sheet, a polyetherketone sheet, a polyether-etherketone sheet, a polyphenylene sulfide sheet, or a poly (4-methylpentene-1) sheet or the like may be used. From the viewpoint of thermal resistance, dimensional stability, and economical efficiency, a polyethylene terephthalate sheet and a polyethylene naphthalate sheet are preferred.

Although the thickness of the substrate sheet varies to some extent depending on a material to be used, the thickness is typically about 5 to 300 µm and preferably about 10 to 100 µm. In the case of a polyethylene terephthalate sheet or film as one preferred substrate sheet, its thickness is preferably about 10 to 50 µm, and a commercially available product can be used. There may also be used a polyethylene terephthalate sheet or film to which an ultraviolet ray absorbent is added.
A commercially available polyethylene terephthalate sheet or film to which an ultraviolet ray absorbent is added is, for example, a PET25 Q37 manufactured by Toray Industries, Inc. or a Tetoron Film HB manufactured by Teijin DuPont Films Japan Limited. In addition, a substrate sheet to which no ultraviolet ray absorbent is added such as a PET25 T60 manufactured by Toray Industries, Inc. may be coated with a primer to which any such ultraviolet ray absorbent as described above is added.

For coating the pressure sensitive adhesive to the substrate sheet, a solution of the pressure sensitive adhesive is prepared, and the resultant can be coated using a general method such as a gravure coating method, a bar coating method, a spray coating method, a spin coating method, a roll coating method, a die coating method, a knife coating method, an air knife coating method, a hot melt coating method, and a curtain coating method.

The pressure sensitive adhesive layer to be formed on the substrate sheet has a thickness of typically about 1 to 50 µm and preferably about 5 to 40 µm after having been dried and cured. Setting the thickness of the pressure sensitive adhesive layer to 1 µm or more can secure a pressure sensitive adhesive force and a cohesive force (holding power) needed for a removable pressure sensitive adhesive sheet to be stuck to an incompletely cured coating film. Setting the thickness to 50µm or less can prevent an increase in cost and can prevent the pressure sensitive adhesive layer from lying off an edge.

When the surface of the pressure sensitive adhesive applied onto the substrate sheet and the surface of the release agent of the release sheet (to be described later) separately prepared are stuck to each other, or the pressure sensitive adhesive is applied to one surface of the substrate sheet, the release agent is applied to the other surface of the sheet, and the surface of the pressure sensitive adhesive and the surface of the release agent are stuck to each other, and then the resultant is wound in a roll shape, a stable pressure sensitive adhesive force can be imparted by curing (cross-linking) a component of the pressure sensitive adhesive through heating or irradiation with active energy beams as described above.

From the viewpoint of the prevention of an "adhesive-remaining" phenomenon in which when the removable pressure sensitive adhesive sheet of the present invention is released from, for example, the coated surface of the body or a part of an automobile, the pressure sensitive adhesive layer partially transfers to the coated surface, one surface (surface on which the pressure sensitive adhesive layer is formed) in the substrate sheet is preferably subjected to a corona discharge treatment and/or an ozone treatment in order that adhesiveness between the pressure sensitive adhesive layer and the substrate sheet is strengthened.

Subsequently, the release sheet is described in detail.
The release sheet is similarly used for any one of the pressure sensitive adhesives A to D and any other pressure sensitive adhesive having a storage elastic modulus at 23°C of 1.0×10⁵ Pa or more and a storage elastic modulus at 80°C of 0.4×10⁵ Pa or more.
Examples of release sheet which may be used include resin films of polyethylene terephthalate, polyethylene, polypropylene, or the like, which are coated with a releasing agent such as a fluorine-based resin, a silicone-based resin, and a long chain alkyl group-containing carbamate.
Although the thickness of the release sheet varies to some extent depending on a material to be used, the thickness is typically 10 to 250 µm and preferably 20 to 200 µm.

The removable pressure sensitive adhesive sheet may be such that a pressure sensitive adhesive is applied to the surface opposite to the release agent layer of the substrate sheet, the release agent layer being formed by applying a release agent, to form a pressure sensitive adhesive layer, and then the resultant is wound in a roll shape so that the release agent layer and the pressure sensitive adhesive layer may be stuck to each other. Alternatively, the sheet may be a laminate obtained by cutting the resultant into certain dimensions and laminating the cut pieces so that the release agent layer and the pressure sensitive adhesive layer may be stuck to each other.
Further, also permitted is a single removable pressure sensitive adhesive sheet, which is neither the above laminate nor the above roll shape, obtained by applying a pressure sensitive adhesive to the substrate sheet to form a pressure sensitive adhesive layer, and sticking the surface of the release agent layer of the release sheet separately prepared to the pressure sensitive adhesive layer.

The present invention provides not only the removable pressure sensitive adhesive sheet to be stuck to an incompletely cured coating film but also a method of protecting an incompletely cured coating film, the method being characterized by including sticking the removable pressure sensitive adhesive sheet to the incompletely cured coating film.
The incompletely cured coating film is formed in such a state that, for example, a two-pack polyurethane-based top coat for an automobile is sprayed onto a resin part such as a body or bumper of an automobile so that a thickness of a coat becomes about 1 to 1,000 µm, followed by drying at about 50 to 90°C for about 5 to 60 minutes, and further, leaving to stand at room temperature for about 10 to 60 minutes.
A slight amount of an organic solvent remains in such incompletely cured coating film, or a functional group such as an isocyanate group remains in the coating film. Accordingly, when a pressure sensitive adhesive sheet having a pressure sensitive adhesive that does not conform to such storage elastic modulus as those in the present invention is stuck to the coating film and left to stand for about 1 to 14 days, and then the pressure sensitive adhesive sheet is released, the "steps", the "bleaching", or the like described hereinabove occurs to impair the external appearance of the coating film. In contrast, when the removable pressure sensitive adhesive sheet of the present invention having a storage elastic modulus at 23°C of 1.0×10⁵ Pa or more and a storage elastic modulus at 80°C of 0.4×10⁵ Pa or more is stuck to an incompletely cured coating film in which a slight amount of an organic solvent remains or a functional group such as an isocyanate group remains, the coating film is protected. As a result, even when the pressure sensitive adhesive sheet is released after having been left to stand for about 1 to 14 days, the "steps", the "bleaching", or the like described hereinabove is not caused, whereby, it is not caused to impair the external appearance of the coating film.

### Examples

Subsequently, the present invention is described in more detail by way of Examples and Comparative Examples. However, the present invention is by no means limited by those Examples.

### <Example 1>

As a substrate sheet, there was used a polyethylene terephthalate film "PET25 Q37 manufactured by Toray Industries, Inc. "having a thickness of 25µm to which an ultraviolet ray absorbent was added. A solution having a concentration of 2% by mass was prepared by dissolving a fluorosilicone (X-70-201) manufactured by Shin-Etsu Chemical Co., Ltd. in toluene, and it was applied onto one surface of the substrate sheet with a bar coater, and then the solution was cured by heating at 150°C for 2 minutes. As a result, there was formed a release agent layer having a thickness of 1.0 µm.
Subsequently, a pressure sensitive adhesive solution was prepared by diluting a mixed liquid formed of 100 parts by mass of an addition reaction type silicone-based pressure sensitive adhesive SD-4570PSA (addition reaction type silicone having a silicone resin content of 60% and containing a cross-linking agent) manufactured by Dow Corning Toray Co., Ltd. and 0.9 part by mass of a platinum-based curing catalyst SRX-212 manufactured by Dow Corning Toray Co., Ltd. with 100 parts by mass of toluene. The above pressure sensitive adhesive solution was applied to the surface opposite to the release agent layer of the substrate sheet by employing a knife coating method so as to have a thickness of 30 µm after having been dried. Then, the solution was dried at 130°C for 5 minutes. As a result, a pressure sensitive adhesive layer was formed. Subsequently, the pressure sensitive adhesive layer was stuck to the surface of the above release agent layer so as to be of a roll shape. As a result, there was prepared a removable pressure sensitive adhesive sheet to be stuck to a coating film.
Further, separately, the same mixed liquid as that described above was applied onto the surface of the release agent layer of the above substrate sheet on which the release agent layer was formed, and then the liquid was dried. As a result, there was formed a pressure sensitive adhesive layer having a thickness of 30 µm. 100 pressure sensitive adhesive layers of this type were laminated so that there is prepared a pressure sensitive adhesive layer sheet having a thickness of 3 mm. The sheet was cut into pieces each having a diameter of 8 mm. As a result, there were obtained cylindrical test pieces for measuring storage elastic modulus.

### <Example 2>

A solution was prepared by diluting a mixed liquid formed of 100 parts by mass of an addition-reaction type silicone-based pressure sensitive adhesive SD-4560PSA (addition-reaction type silicone having a silicone resin content of 60% and containing a cross-linking agent) manufactured by Dow Corning Toray Co., Ltd. and 1 part by mass of a platinum-based curing catalyst SRX-212 manufactured by Dow Corning Toray Co., Ltd. with 100 parts by mass of toluene.
In the same manner as in Example 1, the above solution was applied to the surface opposite to the release agent layer of the substrate sheet by employing a knife coating method so as to have a thickness of 30 µm after having been dried. Then, the solution was dried at 130°C for 5 minutes. After that, a dried product was irradiated with electron beams at an accelerating voltage of 200 kV, a beam current of 20 mA, and a dose of 5 Mrad under a nitrogen atmosphere from the side of a layer to serve as a pressure sensitive adhesive layer. As a result, the pressure sensitive adhesive layer was formed. The pressure sensitive adhesive layer was stuck to the surface of the above release agent layer so as to be of a roll shape. As a result, there was prepared a removable pressure sensitive adhesive sheet to be stuck to a coating film.
Cylindrical test pieces for measuring storage elastic modulus were also prepared in the same manner as in Example 1.

### <Example 3>

A toluene solution was prepared by diluting 100 parts by mass of a butylacrylate homopolymer (having a weight-average molecular weight of 600, 000) prepared by a radical polymerization method and 7.5 parts by mass of a urethane acrylate [manufactured by Nippon Synthetic Chemical Industry Co., Ltd., trade name: SHIKO UV-7550B] with toluene so as to have a concentration of 35% by mass. After 4.0 parts by mass of an IRGACURE 184 [acetophenone-based polymerization initiator manufactured by Ciba Specialty Chemicals Inc.] as an initiator had been added to the solution, toluene was added to the mixture to dilute the mixture so that a solid concentration is 30% by mass.
By employing a knife coating method, the above solution having a solid concentration of 30% by mass was applied to one surface of a polyethylene terephthalate film which is a substrate sheet [PET25 Q37 manufactured by Toray Industries, Inc.] having a thickness of 25 µm in which an ultraviolet ray absorbent was added so as to have a thickness of 25 µm after having been dried. Then, the solution was dried at 90°C for 3 minutes to form a pressure sensitive adhesive layer. Subsequently, a release sheet made of a polyethylene terephthalate film [SP-PET380 manufactured by LINTEC Corporation] having a thickness of 38 µm in which no ultraviolet ray absorbent was added was stuck to the pressure sensitive adhesive layer, and the resultant was irradiated with ultraviolet rays by using a high-pressure mercury lamp from the side of the release sheet. As a result, there was prepared a removable pressure sensitive adhesive sheet to be stuck to a coating film. The amount of irradiation of the ultraviolet rays was 300 mJ/cm².
Cylindrical test pieces for measuring storage elastic modulus were also prepared in the same manner as in Example 1.

### <Example 4>

A solution was prepared by diluting a mixed liquid formed of 100 parts by mass of a peroxide curable silicone-based pressure sensitive adhesive KR-101-10 (having a concentration of 60% by mass) manufactured by Shin-Etsu Chemical Co., Ltd. and 1.5 part by mass of benzoyl peroxide as an organic peroxide with 100 parts by mass of toluene.
By employing a knife coating method in the same manner as in Example 1, the above solution was applied to the surface opposite to the release agent layer of the substrate sheet so as to have a thickness of 25 µm after having been dried. Then, the solution was dried at room temperature for 15 minutes. After that, a dried product was cured by heating at 150°C for 5 minutes so that a pressure sensitive adhesive layer is formed. Subsequently, the pressure sensitive adhesive layer was stuck to the above release agent layer so as to be of a roll shape. As a result, there was prepared a removable pressure sensitive adhesive sheet to be stuck to a coating film. Cylindrical test pieces for measuring storage elastic modulus were also prepared in the same manner as in Example 1.

### <Comparative Example 1>

A removable pressure sensitive adhesive sheet for comparison was prepared in the same manner as in Example 1 except that a pressure sensitive adhesive layer was formed by applying a solution (having a solid concentration of 30% by mass) of a removable acrylic pressure sensitive adhesive [manufactured by LINTEC Corporation, trade name: M-4] to the surface opposite to the release agent layer of a substrate sheet having the same release agent layer using a knife coating method, followed by drying the solution at 90°C for 3 minutes so that a thickness of the layer becomes 20 µm after having been dried.
Cylindrical test pieces for comparison for measuring storage elastic modulus were also prepared in the same manner as in Example 1.

### <Comparative Example 2>

A removable pressure sensitive adhesive sheet for comparison was prepared in the same manner as in Example 1 except that the same operation was performed as in Comparative Example 1 using a removable acrylic pressure sensitive adhesive [manufactured by LINTEC Corporation, trade name: M-2206] as a pressure sensitive adhesive.
In addition, cylindrical test pieces for comparison for measuring storage elastic modulus were also prepared in the same manner as in Example 1.
The removable pressure sensitive adhesive sheets obtained in the Examples and the Comparative Examples described hereinabove were evaluated for characteristics on the basis of the following criteria by visually observing the state of the following incompletely cured coating filmwhen anyone of the sheets was released after having been stuck to the coating film and left to stand for a predetermined time period. Table 1 shows the results.

### [Evaluation items and evaluation methods]

1. Preparation of incompletely cured coating film and observation of surface state after each of the removable pressure sensitive adhesive sheets has been stuck to the coating film and released therefrom.
There was sprayed a mixture of 100 parts by mass of a two-pack polyurethane-based clear paint for an automobile [a Quartz Clear Z manufactured by KANSAI PAINT Co., LTD.] and 40 parts by mass of an isocyanate-based curing agent [a multi curing agent for plastics manufactured by KANSAI PAINT Co., LTD.] onto a plate made of a polyolefin-based thermoplastic elastomer to which a primer and an intermediate paint had been applied so that the thickness of the mixture might be about 20 µm. Then, the mixture was dried at 60°C for 30 minutes, and was left to stand at room temperature for 30 minutes, to thereby form an incompletely cured curable coating film. After that, each of the removable pressure sensitive adhesive sheets obtained in Examples and Comparative Examples was cut into pieces of 5 cm by 7 cm in square shape, and each of the pieces was stuck to the coating film so that fine creases were formed.
A test method and test conditions are as described below.
After having been left to stand at room temperature and 80°C for one week, the removable pressure sensitive adhesive sheet was released. At that time, the presence or absence of the "steeps" of crease portions was observed. The presence or absence was visually observed, and irregularities occurring at the traces after having been released were subjected to measurement with a surface roughness meter [a surface appearance analyzer SURFTEST SV-3000 manufactured by Mitutoyo Corporation].
(1) The presence or absence of the "steps" occurring at the crease portions was evaluated on the basis of the following criteria.
   ⊚: No "step" height can be observed.
   ○: A "step" height can be slightly observed, and is 0.1 to 0.3 µm.
   △: A "step" height can be observed, and is more than 0.3 µm and less than 1.0 µm.
   ×: A "step" height can be clearly observed, and is 1.0 µm or more.
(2) Boundary between a stuck portion and a non-stuck portion
   ○: No boundary can be observed.
   △: A boundary can be slightly observed.
   ×: A boundary can be clearly observed.
(3) "Bleaching" at adhesive-contacting surface
   ○: No "bleaching" can be observed.
   △: "Bleaching" can be observed, but can no longer be observed when left to stand outdoors for one week.
   ×: "Bleaching" can be observed, and can be observed even after having been left to stand outdoors for one week.

### 2. Measurement of storage elastic modulus

The measurement of storage elastic modulus was performed as described below by using the samples for measuring storage elastic modulus obtained in the respective Examples and Comparative Examples described hereinabove.
Storage elastic modulus (G') were measured with a dynamic viscoelasticity measuring apparatus "DYNAMIC ANALYZER Model RDA II" manufactured by Rheometric Scientific, Inc. under conditions of a frequency of 1 Hz, and temperatures of 23°C and 80°C by a "torsional shearing method".

[Table 1]

**Table 1**

| | Storage elastic modulus (Pa) | | "Step" at crease portion | | Boundary line between sheet-stuck portion and non-stuck portion | | "Bleaching" of adhesive-con tacting surface | |
|---|---|---|---|---|---|---|---|---|
| | 23°C | 80°C | 23°C | 80°C | 23°C | 80°C | 23°C | 80°C |
| Example 1 | 2.70×10⁵ | 0.90×10⁵ | ⊚ | ⊚ | ○ | ○ | ○ | ○ |
| Example 2 | 3.90×10⁵ | 1.20×10⁵ | ⊚ | ⊚ | ○ | ○ | ○ | ○ |
| Example 3 | 1.20×10⁵ | 0.57×10⁵ | ⊚ | ○ | ○ | ○ | ○ | ○ |
| Example 4 | 10.00×10⁵ | 1.50×10⁵ | ⊚ | ○ | ○ | ○ | ○ | ○ |
| Comparative Example 1 | 0.88×10⁵ | 0.24×10⁵ | △ | × | △ | × | × | × |
| Comparative Example 2 | 0.50×10⁵ | 0.20×10⁵ | △ | × | △ | × | × | × |

As is apparent from Table 1, the removable pressure sensitive adhesive sheet to be stuck to a coating film of the present invention obtained in each Example is superior in any characteristic to the removable pressure sensitive adhesive sheet obtained in each Comparative Example.

### Industrial Applicability

Because the removable pressure sensitive adhesive sheet of the present invention is applicable even to a coating film incompletely cured immediately after having been dried, the sheet can protect an incompletely cured coating film applied to, in particular, the body, or a part, of an automobile without deteriorating or discoloring the coating film. In addition, the method of protecting an incompletely cured coating film of the present invention is applicable to the body, or a part, of an automobile that is being stored or transported.

## Claims

1. A removable pressure sensitive adhesive sheet to be stuck to a coating film wherein a pressure sensitive adhesive layer is formed on a substrate sheet, which comprises the pressure sensitive adhesive layer having a storage elastic modulus at 23°C of 1.0×10⁵ Pa or more and a storage elastic modulus at 80°C of 0.4×10⁵ Pa or more.

2. The removable pressure sensitive adhesive sheet according to claim 1, wherein the pressure sensitive adhesive layer is formed of an addition reaction type silicone-based pressure sensitive adhesive or a peroxide-curable silicone-based pressure sensitive adhesive.

3. The removable pressure sensitive adhesive sheet according to claim 1, wherein the pressure sensitive adhesive layer comprises a pressure sensitive adhesive layer obtained by cross-linking a layer formed of a composition through irradiation with active energy beams, the composition containing an active hydrogen free acrylic homopolymer or copolymer containing at least one kind selected from butyl(meth)acrylate, 2-ethylhexyl(meth)acrylate, and isooctyl(meth)acrylate as a monomer component, and a urethane (meth)acrylate.

4. The removable pressure sensitive adhesive sheet according to claim 1, wherein the pressure sensitive adhesive layer contains a resin obtained by cross-linking a copolymer having unsaturated groups at its side chains through irradiation with active energy beams, and the copolymer contains at least one kind selected from butyl(meth)acrylate, 2-ethylhexyl(meth)acrylate, and isooctyl (meth)acrylate as a monomer component.

5. The removable pressure sensitive adhesive sheet according to claim 1, wherein the substrate sheet comprises a polyethylene terephthalate sheet.

6. A method of protecting an incompletely cured coating film, the method comprising sticking, to the incompletely cured coating film, a removable pressure sensitive adhesive sheet obtained by providing a substrate sheet with a pressure sensitive adhesive layer having a storage elastic modulus at 23°C of 1.0×10⁵ Pa or more and a storage elastic modulus at 80°C of 0.4×10⁵ Pa or more.
